# NEUE EUROPÄISCHE PATENTSCHRIFT

(11) **EP 1 323 769 B2**
(45) Veröffentlichungstag und Bekanntmachung des Hinweises auf die Entscheidung über den Einspruch: **13.05.2009**
(45) Hinweis auf die Patenterteilung: 31.05.2006
(21) Anmeldenummer: 02025163.3
(22) Anmeldetag: 11.11.2002
(51) Int. Cl.: C08J 3/205, C08L 75/04, C08J 3/20, C09D 5/03, B29C 67/04

(54) **Verfahren zur Aufbringung von Funktionsmaterialien auf thermoplastisches Polyurethan**
Process for applying functionalised compounds onto thermoplastic polyurethane
Procédé pour appliquer un matériau fonctionnalisé sur un polyuréthane thermoplastique

(30) Priorität: 18.12.2001 DE 10162348
(43) Veröffentlichungstag der Anmeldung: 02.07.2003
(73) Patentinhaber: BASF SE, 67056 Ludwigshafen (DE)
(72) Erfinder: Etzrodt, Günter, Dr., 70180 Stuttgart (DE); Leberfinger, Marcus, Dr., 49124 Georgsmarienhütte (DE); Bayer, Robert, 74889 Sinsheim (DE); Arenz, Stefan, Dr., 49090 Osnabrück (DE); Fähndrich, Knud, 49356 Diepholz (DE); Scholz, Günter, Dr., 49448 Lemförde (DE)

(56) Entgegenhaltungen:
- EP-A- 0 928 812
- WO-A1-00/44821
- DE-A- 4 441 638
- US-A- 3 591 409
- US-A- 4 003 872

## Beschreibung

Die Erfindung betrifft ein Verfahren zur Aufbringung von Funktionsmaterialien auf thermoplastisches Polyurethan und die Verwendung eines Teilchengemischs zur Beschichtung von Oberflächen durch Sintern, umfassend Teilchen, aufgebaut aus
i) einem thermoplastischen Polyurethan enthaltenden Kern und
ii) einer Funktionsmaterialien enthaltenden Hülle.

Ferner betrifft die Erfindung ein Verfahren zur Herstellung von Formkörpern unter Verwendung des erfindungsgemäßen Teilchengemisches.

Thermoplastische Polyurethane (nachstehend als TPU bezeichnet) sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeit aus, und können in nahezu beliebiger Härte durch geeignete Rohstoffzusammensetzung hergestellt werden.

TPUs werden in der Regel während der thermoplastischen Verarbeitung (z.B. Spritzguss oder Extrusion) durch Farbmasterbatche eingefärbt. Während der thermoplastischen Verarbeitung von TPUs können auch Additivmasterbatche, die beispielsweise Stabilisatoren oder Verarbeitungshilfsmittel, wie z.B. Gleitmittel, enthalten, zugesetzt werden. Unter "Masterbatch" werden im allgemeinen Zusätze verstanden, die Additive wie beispielsweise farbgebende Mittel, Pigmente, Stabilisatoren, Gleitmittel und/oder Kristallisationshilfsmittel, in hoher Konzentration enthalten, und die schließlich kostengünstig in Masterbatchanteilen vom 0,1 bis 10 % dem eigentlichen thermoplastisch zu verarbeitenden Elastomeren zugesetzt werden.

Durch den Zusatz von Masterbatchen kann es jedoch zu Produktverschlechterungen bzw. Verarbeitungsverschlechterungen kommen. Hier seien beispielsweise Stippenbildungen, Inhomogenitäten, Druckschwankungen, in der Regel bedingt durch eine mangelhafte Vermischung von Masterbatch und Basis-TPU, genannt.

Des weiteren können temperaturempfindliche Komponenten, wie z.B. Vernetzungsmittel, nicht über Masterbatche dem Basis-TPU zugesetzt werden, da sich diese bereits bei der Herstellung des Masterbatch unter Temperatureintrag umsetzen, zersetzen bzw. vernetzen.
Eine weitere Art der thermoplastischen Verarbeitung von TPU neben Spritzguss und Extrusion ist das Sinterverfahren, bei dem TPU-Pulver durch Eintrag von Temperatur in Werkzeugen zu Folien gesintert werden. Als Beispiel sei hier das Powder-SlushVerfahren genannt. Durch dieses Verfahren werden üblicherweise genarbte Instrumententafeloberflächen mit einer Dicke von 0,1 bis 2 mm hergestellt, die im Anschluss durch Hinterschäumen zur fertigen Instrumententafeln verarbeitet werden.

Eine weitere Variante des Sinterverfahrens besteht in der Beschichtung von Oberflächen wie z.B. von Metall, Holz, Kunststoffen oder textilen und keramischen Oberflächen durch TPU-Pulver.

Das TPU-Pulver wird für diese Anwendungen, wie z.B. in EP-A-928 812 beschrieben, zunächst als farbloses TPU-Granulat über einen Extrusionsschritt mit Farbmasterbatch eingefärbt und anschließend zu Pulver kaltgemahlen. Anders als bei Extrusions- und Spritzgussanwendungen kann hier bei der eigentlichen thermoplastischen Verarbeitung im Sinterprozess nicht direkt mit einem Farbmasterbatch-Granulat oder Farbmasterbatch-Pulver gearbeitet werden, da durch das Fehlen von Scher- und Friktionseintrag eine innige Durchmischung im Sinterprozess und somit eine gleichmäßige Farbverteilung nicht gewährleistet ist.

Besondere Anforderungen werden an Instrumententafeloberflächen gestellt, sofern sie einen Airbag bedecken. Hier sind im Vergleich zu konventionellen Anwendungen mit TPU, niedrige mechanische Eigenschaften (z.B. Zugfestigkeiten <15 N/mm²), insbesondere eine niedrige Reißdehnung (z.B. <400 %, bevorzugt <300 %), wünschenswert, um ein einwandfreies Aufreisen der Instrumententafel zu gewährleisten.

Aufgabe dieser Erfindung war es daher, ein vorteilhaftes Verfahren bereit zu stellen, durch welches Funktionsmaterialien jeglicher Art, wie beispielsweise Pigmente, Stabilisatoren; Gleitmittel; Verarbeitungshilfsmittel und Vernetzungsmittel, ohne schädigenden Temperatureintrag schonend in TPU ein- bzw. aufgebracht werden können.

Aufgabe dieser Erfindung war es weiterhin, ein verbessertes Einfärbeverfahren zu entwickeln, welches ein schnelleres, flexibleres und bezüglich der Farbgenauigkeit präziseres Einfärben, vor allem für das Sinterverfahren ermöglicht. Weiterhin soll auch die Herstellung von Effektfarbtönen mit hohen Helligkeits- (L*) und Chromawerten (C*) möglich sein.

Ferner war es Aufgabe der Erfindung, einen Formkörper, insbesondere eine Instrumententafeloberfläche bereitzustellen, die als Abdeckung für einen Airbag vorteilhaft ist, d.h. sollte zu herkömmlichen TPU eine vergleichsweise niedrige Reißdehnungen erzielen, um dass Aufreißen der Haut im Bereich des unsichtbaren Airbags im Falle eines Auslösens des Airbags zu erleichtern.

Die Aufgaben konnten gelöst werden, indem die Funktionsmaterialien auf die Oberfläche von TPU, bevorzugt von TPU-Granulaten und/oder TPU-Pulver, mit oder ohne Bindemittel aufgebracht bzw. angebunden wurden.

Gegenstand der Erfindung ist daher ein Verfahren zur Aufbringung von Funktionsmaterialien auf thermoplastisches Polyurethan, umfassend folgende Schritte
a) Eintragen von partikelförmigem thermoplastischem Polyurethan in eine Mischvorrichtung,
b) in Bewegung halten des partikelförmigen thermoplastischen Polyurethans in der Mischvorrichtung und währenddessen
c) Einbringen von Funktionsmaterialien oder eines Funktionsmaterialien enthaltenden Gemisches in zerstäubter Form in die Mischvorrichtung.

Ferner ist Gegenstand der Erfindung ein Teilchengemisch, umfassend Teilchen, aufgebaut aus
i) einem Kern mit einem mittleren Durchmesser von 10 µm bis 10 mm, enthaltend thermoplastisches Polyurethan und
ii) einer Hülle, bevorzugt mit einer mittleren Dicke von 0,1 bis 500 µm, enthaltend Funktionsmaterialien
zum Beschichten von Oberflächen durch Sintern.

Weiterhin ist Gegenstand der Erfindung ein Verfahren zur Herstellung eines Formkörpers, insbesondere einer Folie, umfassend die Schritte
a) Einbringen eines vorstehend beschriebenen Teilchengemisches in eine Form und
b) Sintern des Teilchengemisches in der Form,
sowie Formkörper, erhältlich durch das vorstehend genannte Verfahren.

Im erfindungsgemäßen Verfahren wird partikelförmiges TPU verwendet. Darunter ist im allgemeinen TPU-Granulat, TPU-Pulver oder ein Gemisch daraus zu verstehen. In einer bevorzugten Ausführungsform weist das partikelförmige TPU einen mittleren Teilchendurchmesser von 10 µm bis 10 mm auf. Besonders bevorzugt wird TPU-Granulat mit einem mittleren Teilchendurchmesser von 800 µm bis 5 mm, insbesondere von 1mm bis 4 mm verwendet. Ebenso ist es besonders bevorzugt ein TPU-Pulver mit einem mittleren Teilchendurchmesser von 10 µm bis 700 µm, insbesondere von 50 µm bis 600 µm, zu verwenden.

Der mittlere Teilchendurchmesser, der auch als d₅₀-Wert der integralen Massenverteilung bezeichnet wird, wird als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert. Die Bestimmung des Teilchendurchmesser erfolgte durch fraktioniertes Sieben.

Als Mischvorrichtung für das erfindungsgemäße Verfahren ist grundsätzlich jede Vorrichtung geeignet, in der das partikelförmige TPU in Bewegung gehalten werden kann und die das Einbringen von Funktionsmaterialien oder eines Funktionsmaterialien enthaltenden Gemisches in zerstäubter Form ermöglicht. Weiterhin ist es bevorzugt, dass die Mischvorrichtung beheizbar ist. Beispiele für derartige Mischvorrichtungen sind Doppelkonusmischer oder ein Mischer mit Rührwerk. Bevorzugt wird als Mischvorrichtung ein Sprühwirbelreaktor oder ein Sprühwirbelbett verwendet.

Unter in Bewegung halten des partikelförmigen TPUs wird ein Bewegen, Vermischen oder Verwirbeln des TPU-Granulats und/oder TPU-Pulvers verstanden, so dass stets unterschiedliche Teilchen bzw. unterschiedliche Stellen auf der Oberfläche der jeweiligen Teilchen mit eingebrachten Funktionsmaterialien oder dem Funktionsmaterialien enthaltenden Gemisch in Kontakt kommen können. Das in Bewegung halten kann beispielsweise durch Schüttelbewegungen, durch Rühren mit einer Rührvorrichtung oder durch Einblasen eines Gasstromes in die Mischvorrichtung erfolgen.

Bevorzugt ist das Einblasen eines Gasstromes, in der Regel liegt dazu das partikelförmige TPU auf einen perforierten Boden durch den das Gas eingeblasen wird. In einer besonders bevorzugten Ausführungsform wird die Gaseinblasung derart durchgeführt, dass eine Wirbelschicht entsteht, d.h. das partikelförmige TPU befindet sich in einer ständigen wirbelnden Auf- und Abbewegung und bleibt so gewissermaßen in der Schwebe. Als Gas ist grundsätzliche jedes gegenüber dem TPU und den Funktionsmaterialien inerte Gas möglich, bevorzugt ist Luft oder Stickstoff.

Während ein in Bewegung halten des partikelförmigen TPU erfolgt, werden Funktionsmaterialien oder ein Funktionsmaterialien enthaltendes Gemisch in zerstäubter Form in die Reaktionsvorrichtung eingebracht. Die Funktionsmaterialien können dabei in Substanz oder bevorzugt zusammen mit einem Lösungsmittel oder Lösungsmittelgemisch in Form einer Lösung oder Dispersion eingebracht werden.

Das Einbringen der Funktionsmaterialien enthaltenden Dispersion oder Lösung kann beispielsweise unter Druck durch eine Einstoffdüse oder drucklos durch Zerstäubung der Flüssigkeit in einer Mehrstoffdüse durch verdichtetes Gas in die Mischvorrichtung, beispielsweise in einen Sprühwirbelreaktor, eingesprüht werden. Die Funktionsmaterialien lagern sich an der Substratoberfläche, d.h. an der Oberfläche des partikelförmigen TPUs ab und bleiben hier haften. Die Haftwirkung an der Substratoberfläche ist von den Einsatzstoffen abhängig und kann gegebenenfalls durch Zugabe von Bindemitteln verbessert werden. In einer bevorzugten Ausführungsform wird das Bindemittel dem Lösungsmittel zugesetzt.

Die Dicke der Schicht aus Funktionsmaterialien, die auf dem partikelförmigen TPU aufgebracht wird hängt von der Art der eingesetzten Funktionsmaterialien und von der Durchführungsdauer des erfindungsgemäßen Verfahrens ab. Eine längere Durchführungsdauer führt dabei zu einer erhöhten Dicke. Die Dicke der Schicht, enthaltend Funktionsmaterialien, ist nicht begrenzt, im allgemeinen liegt sie zwischen 0,1 µm und 500 µm, besonders bevorzugt zwischen 0,1 µm und 250 µm.

Bei dem erfindungsgemäßen Verfahren, insbesondere bei der Verwendung eines Sprühwirbelreaktor als Mischvorrichtung, wird vorzugsweise ein Bindemittel verwendet, dies ist aber nicht zwingend erforderlich, d.h. es kann auch auf Bindemittel verzichtet werden. Als Bindemittel geeignet sind z.B. dispergierbare und/oder lösliche oligomere oder polymere Acrylate, PUR und/oder Epoxyde. Bevorzugt verwendet werden beispielsweise PUR-Systeme jeglicher Art, z.B. wässrige PUR-Dispersionen. Üblicherweise werden Bindemittel in einer Menge eingesetzt von 0 bis 15 Gew.-%, bevorzugt 0 bis 5 Gew.-%, bezogen auf das Gewicht des thermoplastischen Polyurethans.

Sofern Lösungsmittel, beispielsweise als Träger oder zur Steuerung der Rheologie der einzusprühenden Reagenzien, eingesetzt wird, so verdampft im allgemeinen das Lösungsmittel in der Mischvorrichtung und kann durch Kondensation im Kühler wieder zurückgewonnen werden.

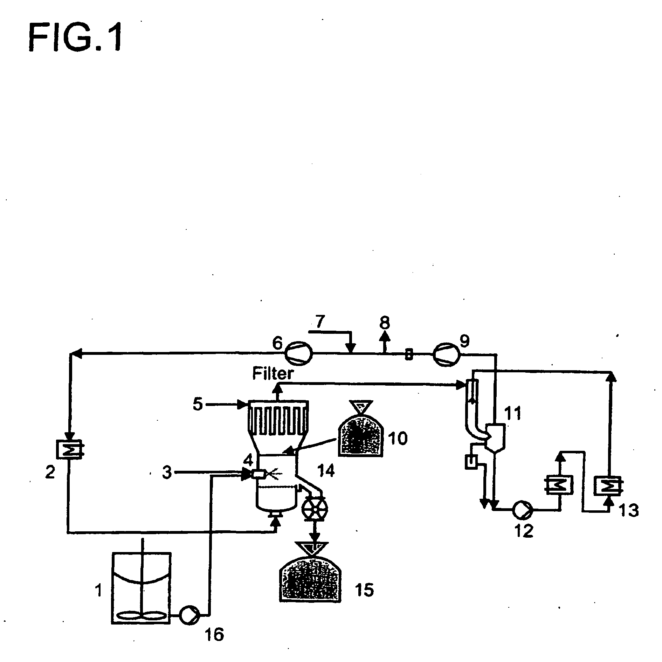

Eine bevorzugte Ausführungsform des erfindungsgemäßen Verfahrens ist in Figur 1 veranschaulicht. Hier wird ein Sprühwirbelreaktor als Mischvorrichtung verwendet.

In Figur 1 bedeutet:
- 1: Funktionsmaterialien enthaltende Lösung oder Dispersion
- 2: Gaserhitzer
- 3: Düsengas (z.B. Stickstoff, Luft, Kohlendioxyd oder ein Gemisch daraus)
- 4: Zweistoffdüse
- 5: Stickstoff
- 6: Druckgebläse
- 7: Gas (z.B. Stickstoff, Luft, Kohlendioxyd oder ein Gemisch daraus)
- 8: Abluft
- 9: Sauggebläse
- 10: Partikelförmiges TPU
- 11: Wäscher
- 12: Pumpe
- 13: Kühler
- 14: Sprühwirbelreaktor
- 15: Fertigprodukt, d.h. erfindungsgemäßes Teilchengemisch
- 16: Pumpe

Zur Herstellung der Dispersion oder Lösung, enthaltend Funktionsmaterialien und Lösungsmittel, sind im allgemeinen alle Lösungsmittel verwendbar, die vorzugsweise nicht mit dem TPU oder den Funktionsmaterialien unter den gegebenen Umständen reagieren oder quellen und die vorteilhaft aus der Mischvorrichtung, beispielsweise durch Destillation, entfernt werden können. Beispiele hierfür sind Wasser oder organische Lösungsmittel, wie Aceton, Diethylether, Tetrahydrofuran, Dichlormethan, Pentan, Hexan, Essigsäureethylester und dergleichen.

Zur Herstellung einer geeigneten Dispersion beträgt üblicherweise das Verhältnis Lösungsmittel zu Funktionsmaterialien, gegebenenfalls inklusive Bindemittel, 10 : 1 bis 1: 10, bezogen auf Gewichtsteile.

Die Temperatur bei der Durchführung des erfindungsgemäßen Verfahrens, insbesondere die Temperatur der Dispersion und des Sprühwirbelreaktors sind für den Prozess nicht entscheidend. Es können Temperaturen in einem weiten Bereich gewählt werden, im allgemeinen wird das erfindungsgemäße Verfahren zum Aufbringen von Funktionsmaterialien zwischen 0°C und 200°C, bevorzugt zwischen 20°C und 80°C durchgeführt. Die Prozesstemperatur im Sprühreaktor richtet sich in der Regel nach dem eingesetzten Lösungsmittel und nach der Art des verwendeten TPUs.

Als Funktionsmaterialien kommen alle Stoffe in Betracht, die im allgemeinen als Hilfsstoffe, Zusatzstoffe und/oder Additive für thermoplastische Polyurethane möglich sind Insbesondere umfasst der Begriff Funktionsmaterial nachstehend aufgeführte Stoffe.

Farbgebende Mittel, wie Farbstoffe und Pigmente;
Stabilisatoren, wie UV-Absorber, beispielsweise Benzotriazole, Lichtschutzmittel, wie beispielsweise HALS-Verbindungen, Antioxidantien, wie beispielsweise phenolische Antioxidantien und Hydrolysestabilisatoren, wie beispielsweise Carbodiimide und Epoxide;
Flammschutzmittel, wie anorganische Hydroxide, wie beispielsweise Aluminiumhydroxid, anorganische Phosphate, wie beispielsweise Ammoniumpolyphosphat oder organische Stickstoffverbindungen, wie Melamin oder Melaminderivate;
Gleitmittel, Wachse und/oder Verarbeitungshilfen, wie Fettsäureamide, beispielsweise Stearylamid, Montansäureester; Polysiloxane;
Treibmittel, bevorzugt werden hier zwei Typen verwendet:
a) thermisch expandierbare Microsphers, enthaltend organische Gase oder Halogenkohlenwasserstoffe
b) Treibmittel auf Basis von zersetzbaren Feststoffen, wie Natriumhydrogencarbonat, Ammoniumhydrogentartrat, Ammoniumoxalat, Azodicarbonamid, Diphenoxydisulfohydroxid, p-Toluylsulfonylsemicarbazid, 5-Phenyltertrazol und/oder Zitronensäure;
   Vernetzungsmittel, wie polyfunktionelle zerewitinoffaktive Verbindungen, wie beispielsweise Trimethylolpropan, Pentaerythrit oder Glycerin, Peroxide oder durch Licht, b- oder g-Strahlung vernetzbare, bevorzugt doppelbindungshaltige Verbindungen, umfassend Monomere, Oligomere oder Polymere; und/oder
   Nukleierungshilfsmittel oder Mattierungsmittel wie Ruß oder Talkum.

Die Funktionsmaterialien können sowohl einzeln als auch im Gemisch von zwei oder mehr Funktionsmaterialien eingesetzt werden.

Das erfindungsgemäße Verfahren eignet sich insbesondere zum Aufbringen von organischen und anorganischen Pigmenten auf TPU. Bei den organischen Pigmenten kann es sich dabei um organische Bunt-, Weiß- und Schwarzpigmente (Farbpigmente) und Flüssigkristallpigmente handeln. Anorganische Pigmente können ebenfalls Farbpigmente sowie Glanzpigmente und die üblicherweise als Füllstoffe eingesetzten anorganischen Pigmente sein. Im folgenden seien als Beispiele für geeignete organische Farbpigmente genannt:

| | | |
|---|---|---|
| - | Monoazopigmente: | C.I. Pigment Brown 25; |
| | | C.I. Pigment Orange 5, 36 und 67; |
| | | C.I. Pigment Red 3, 48:2, 48:3, |
| | | 48:4, 52:2, 63, 112 und 170; |
| | | C.I. Pigment Yellow 3, 74, 151 |
| | | und 183; |
| | | |
| - | Disazopigmente: | C.I. Pigment Red 144, 166, 214 |
| | | und 242; |
| | | C.I. Pigment Yellow 83; |
| | | |
| - | Anthrachinonpigmente: | C.I. Pigment Yellow 147 und 177; |
| | | C.I. Pigment Violet 31; |
| | | |
| - | Benzimidazolpigmente: | C.I. Pigment Orange 64; |
| | | |
| - | Chinacridonpigmente: | C.I. Pigment Orange 48 und 49; |
| | | C.I. Pigment Red 122, 202 und 206; |
| | | C.I. Pigment Violet 19; |
| | | |
| - | Chinophthalonpigmente: | C.I. Pigment Yellow 138; |
| | | |
| - | Diketopyrrolopyrrolpigmente: | |
| | | C.I. Pigment Orange 71 und 73; |
| | | C.I. Pigment Red, 254, 255, 264 und 270; |
| | | |
| - | Dioxazinpigmente: | C.I. Pigment Violet 23 und 37; |
| | | |
| - | Indanthronpigmente: | C.I. Pigment Blue 60; |
| | | |
| - | Isoindolinpigmente: | C.I. Pigment Yellow 139 und 185; |
| | | |
| - | Isoindolinonpigmente: | C.I. Pigment Orange 61; |
| | | C.I. Pigment Yellow 109 und 110; |
| | | |
| - | Metallkomplexpigmente: | C.I. Pigment Yellow 153; |
| | | |
| - | Perinonpigmente: | C.I. Pigment Orange 43; |
| | | |
| - | Perylenpigmente: | C.I. Pigment Black 32; |
| | | C.I. Pigment Red 149, 178 und 179; |
| | | C.I. Pigment Violet 29; |
| | | |
| - | Phthalocyaninpigmente: | C.I. Pigment Blue 15, 15:1, 15:2, |
| | | 15:3, 15:4, 15:6 und 16; |
| | | C.I. Pigment Green 7 und 36; |
| | | |
| - | C.I. Pigment Black 1 (Anilinschwarz); | |

Geeignete anorganische Farbpigmente sind z.B.:

| | | |
|---|---|---|
| - | Weißpigmente: | Titandioxid (C.I. Pigment White 6), |
| | | Zink-weiß, Farbenzinkoxid; Zinksulfid, Lithopone; |
| | | |
| - | Schwarzpigmente: | Eisenoxidschwarz (C.I. Pigment Black 11),Eisen-Mangan-Schwarz, Spinellschwarz (C.I. Pigment Black 27); Ruß (C.I. Pigment Black 7); |
| | | |
| - | Buntpigmente: | Chromoxid, Chromoxidhydratgrün; |
| | | Chromgrün (C.I. Pigment Green 48); Cobaltgrün |
| | | (C.I. Pigment Green 50); Ultramaringrün; |
| | | |
| | | Kobaltblau (C.I. Pigment Blue 28 und 36); Ultramarinblau; Manganblau; |
| | | |
| | | Ultramarinviolett; Kobalt- und Manganviolett; |
| | | |
| | | Eisenoxidrot (C.I. Pigment Red 101); Cadmiumsulfoselenid (C.I. Pigment Red 108); Molybdatrot (C.I. Pigment Red 104); Ultramarinrot; |
| | | Eisenoxidbraun, Mischbraun, Spinell- und Korundphasen (C.I. Pigment Brown 24, 29 und 31), Chromorange; |
| | | |
| | | Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34); Bismutvanadat (C.I. Pigment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Weiterhin ist es nach dem erfindungsgemäßen Verfahren möglich, neben den bekannten Einfärbungen mit Uni-Farbtönen auch Effektfarbtöne mit hohen Helligkeitswerten L* und hohen Chromawerten C* zu realisieren. Bei der klassischen Einfärbung über den Zweischneckenextruder werden empfindliche Flake-Pigmente, wie AluminiumPlättchen oder beschichtete Glimmer-Plättchen, mechanisch so stark zerstört, dass die Helligkeit L* und das Chroma C* nach der Einarbeitung in den Kunststoff deutlich niedrigere Werte zeigen. Nach dem erfindungsgemäßen Verfahren werden die Flakes in die zu versprühende niedrigviskose Dispersion nur schonend eingerührt, so dass keine mechanische Schädigung erfolgt. So gelangen sie im Ursprungszustand auf die Oberfläche der Kunststoffpartikel, zusätzlich werden sie durch das Bindemittel gegen Chemikalien- und Wettereinflüsse geschützt. Die Helligkeit L* und das Chroma C* zeigen nach der Einarbeitung in den Kunststoff deutlich höhere Werte als nach der aus dem Stand der Technik bekannten Arbeitsweise.

Zur Herstellung farbiger "Metallic"-Einfärbungen wird das in der Regel schwer dispergierbare transparente Farbpigment in der niedrigviskosen Lösungsmittel / Bindemitteldispersion durch Einsatz hoher Scherkräfte ausdispergiert, dadurch werden Ausfärbungen mit hohen Chroma C*-Werten erhalten. In diese Dispersion können dann Flake-Pigmente eingerührt werden, anschließend wird die Dispersion auf die Oberfläche der Kunststoffpartikel im Wirbelbett versprüht. Nach der Weiterverarbeitung der Kunststoffpartikel werden optisch sehr attraktive Effektfarbtöne erhalten.

Die Glanzpigmente können sowohl einphasig als auch mehrphasig aufgebaut sein.

Als einphasige Glanzpigmente sind plättchenförmige Metallpigmente wie die im Handel erhältlichen Aluminiumplättchen von besonderem Interesse.

Die mehrphasig aufgebauten Glanzpigmente können auf plättchenförmigen Substratteilchen basieren, die ein- oder mehrfach beschichtet werden, oder auf ebenfalls schichtartig aufgebauten Teilchen, die durch aufeinanderfolgendes filmartiges Aufbringen der gewünschten Schichtmaterialien auf eine Trägerfolie, anschließendes Entfernen der Trägerfolie von dem mehrschichtigen Film und dessen Zerkleinerung auf Pigmentteilchengröße hergestellt werden.

Bei der erstgenannten Variante stellen die bereits genannten plättchenförmigen Metallpigmente, insbesondere die Aluminiumplättchen, und oxidische Plättchen wie Plättchen aus vorzugsweise mit Aluminium und Mangan dotiertem Eisen(III)oxid und Glimmerplättchen bevorzugte Substratmaterialien dar. Bei der zweitgenannten Variante werden als Materialien für die zentrale Schicht bevorzugt Metalle wie Aluminium und Oxide wie Siliciumdioxid eingesetzt. Als Beschichtungsmaterialien dienen bei beiden Varianten üblicherweise Metalloxide und Metalle.

Als Beispiele für einfach beschichtete Pigmentplättchen seien mit Titandioxid, Eisen(III)oxid oder niederen Titanoxiden und/oder Titanoxynitriden beschichtete Glimmer- und Aluminiumplättchen genannt. Goniochromatische Glanzpigmente, die besonders ausgeprägte winkelabhängige Farbwechsel zeigen, können durch Belegen der Substratplättchen (z.B. Aluminium-, Eisenoxid- oder bereits titandioxidbeschichtete Glimmerplättchen) mit abwechselnden Schichten niedrigbrechender Materialien wie Siliciumdioxid und Magnesiumfluorid und hochbrechenden Materialien wie Eisen(III)oxid, Titandioxid und den weiteren bereits genannten Titanverbindungen erhalten werden.

Derartige mehrphasige Glanzpigmente sind bekannt und im Handel z.B. unter den Namen Paliocrom^{®} und Variocrom^{®} (BASF), Iriodin^{®}, Xirallic^{®} und Colorstream^{®} (Merck) sowie Chromaflair^{®} (Flex Products) erhältlich.

Durch das vorstehend beschriebene Verfahren ist ein Teilchengemisch erhältlich, umfassend Teilchen aufgebaut aus
i) einem Kern mit einem mittleren Durchmesser von 10 µm bis 10 mm, enthaltend thermoplastisches Polyurethan und
ii) einer Hülle, bevorzugt mit einer mittleren Dicke von 0,1 µm bis 25 µm, enthaltend Funktionsmaterialien

Der Kern (i) enthält TPU und weist einen mittleren Teilchendurchmesser von 10 µm bis 10 mm auf. Besonders bevorzugt wird als Kern ein TPU-Granulat mit einem mittleren Teilchendurchmesser von 800 µm bis 5 mm, insbesondere von 1 mm bis 4 mm verwendet. Ebenso ist es besonders bevorzugt als Kern ein TPU-Pulver mit einem mittleren Teilchendurchmesser von 10 µm bis 700 µm, insbesondere von 50 µm bis 600 µm, zu verwenden.

Üblicherweise umfasst das Teilchengemisch Teilchen mit unterschiedlichen Teilchendurchmesser, d.h. die Teilchengröße liegt in Form einer Verteilung vor. Es ist jedoch auch möglich, dass alle Teilchen, die zu dem Teilchengemisch beitragen, einen gleichen Durchmesser des Kerns (i) oder einen gleichen Durchmesser des Teilchens (Kern und Hülle) aufweisen.

Der Kern (i) wird bedeckt von einer Hülle (ii), die am Kern haftet und ein Funktionsmaterial oder ein Gemisch aus mindestens zwei Funktionsmaterialien enthält. Die Hülle weist bevorzugt eine Dicke 0,1 µm bis 25 µm, mehr bevorzugt von 0,5 µm bis 10 µm und besonders bevorzugt von 1 bis 5 µm auf.

In einer bevorzugten Ausführungsform umgibt die Hülle den Kern komplett. Es ist jedoch auch möglich, dass die Hülle Löcher aufweist oder in sonstiger Weise den Kern nur teilweise umgibt. Im allgemeinen sind durchschnittlich mindestens 50 %, bevorzugt mindestens 75 %, insbesondere mindestens 90 % der Oberfläche des Kerns von der Hülle bedeckt.

Die Verarbeitung der erfindungsgemäß hergestellten Teilchen, die üblicherweise als Granulat oder in Pulverform vorliegen, zu gewünschten Formkörpern, wie Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen kann nach üblichen Verfahren, wie z.B. Spritzguss oder Extrusion erfolgen.

In einer bevorzugten Ausführungsform dient das Teilchengemisch zur Herstellung von Formkörpern, bevorzugt von vorstehend genannten Formkörpern, insbesondere von Folien, umfassend die Schritte
a) Einbringen des Teilchengemisches in eine Form und
b) Sintern des Teilchengemisches in der Form.

In einer weiteren Ausführungsform dient das Teilchengemisch zum Beschichten von Oberflächen durch Sintern.

Ebenfalls kann das erfindungsgemäße Teilchengemisch zur thermoplastischen Verarbeitung im Spritzguss oder in der Extrusion dienen.

Das vorstehend beschriebene Verfahren umfasst somit die aus dem Stand der Technik bekannten Slush- und Powderslush-Verfahren. Im allgemeinen sintert das erfindungsgemäße Teilchengemisch auf der Innenwandung des beheizten Formwerkzeugs innerhalb kurzer Zeit zu einem homogenen Formkörper, der nach dem Abkühlen ohne Verzug entformt werden kann.

Die erfindungsgemäßen Formkörper können bevorzugt zur Herstellung von Folien, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente verwendet werden.

Besonders bevorzugt werden die erfindungsgemäßen Formkörper zur Herstellung von gegebenenfalls genarbten Instrumententafeloberflächen verwendet. Diese Instrumententafeloberflächen können in einem weiteren Arbeitsschritt mit beispielsweise einem Polyurethan-Halbhartschaum hinterschäumt werden.

Verfahren zur Herstellung von TPUs, sind allgemein bekannt. Im allgemeinen können TPUs, durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Bevorzugt wird 4,4'-MDI verwendet.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Inhibitoren weitere Stabilisatoren, z.B. gegen Hydrolyse, Licht, Hitze oder Verfärbung, anorganische und/oder organische Füllstoffe, Verstärkungsmittel und Weichmacher.

Neben den genannten Komponenten a) und b) und gegebenenfalls c), d) und e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Umsetzung kann bei üblichen Isocyanatkennzahlen erfolgen, bevorzugt bei einer Isocyanatkennzahl von 700 bis 1200, besonders bevorzugt bei einer Kennzahl von 800 bis 1100, wobei eine Isocyanatkennzahl von 1000 einer stöchiometrischen Umsetzung, bezogen auf das Verhältnis Isocyanatgruppen zu gegenüber Isocyanat reaktiven Gruppen, bedeutet.

Die Herstellung der TPU kann nach den bekannten Verfahren kontinuierlich, beispielsweise mit Reaktionsextrudem oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Die Erfindung soll durch nachstehende Beispiele veranschaulicht werden. In den Beispielen beziehen sich alle %-Angaben, sofern nichts anderes angegeben ist, auf Gew.-%.

### Beispiel 1.1 (Vergleichsbeispiel):

Ein farbloses TPU-A-Granulat auf Basis HDI/Hexandiol-Butandiol-Adipatester MW=2000/Hexandiol der Härte 89A und einer Kennzahl von 980 wurde in einer Abmischung mit 2 % Farbkonzentrat 1 und vorheriger Trocknung (3 h/110°C), über einen 40 mm Extruder bei einer Temperatur von 190°C zu schwarz eingefärbtem TPU-Granulat compoundiert. Die Granulierung erfolgte über eine Stranggranulierung oder über eine Unterwassergranulierung.

### Herstellung TPU-A:

1000 Gew-Teile eines Polyesterpolyols (Lupraphen® VP9066; Butandiol/Hexandiol-Adipat; Molekulargewicht 2000; OH-Zahl = 56,1) wurden bei 80°C mit 148 Gew-Teilen 1,6-Hexandiol, je 0,5 % Tinuvin® 328, Tinuvin® 622 LD, Irganox® 1010, Elastostab® H01 und als Katalysator 100 ppm DBTL in einem Gefäß unter Rühren vereinigt. Anschließend wurden bei 80°C unter kräftigem Rühren 289 Gew.-Teile Hexamethylendiisocyanat in einem Guss zugegeben. Erreicht das Reaktionsgemisch die Temperatur von 110°C, so wurde die Masse in eine Schale ausgegossen und die Reaktion bei 80°C für 15 h im Temperofen vervollständigt. Die ausreagierte Schwarte wurde im Anschluss granuliert.

### Farbkonzentrat 1:

| | |
|---|---|
| TPU-A-Granulat | 40 % |
| Blanc Fixe N^{®} (BaSO₄) | 33,6 % |
| TiO R-FC^{®} 5 (TiO₂) | 6,4 % |
| Elftex TP^{®} (Schwarzpigment) | 20 % |

Das farbige Granulat wurde mittels des Scheibenmühlverfahrens kalt vermahlen.

| | | |
|---|---|---|
| Kornverteilung des Pulvers: | < 125 µm | 22,0 % |
| | < 200 µm | 40,0 % |
| | < 315 µm | 63,5% |
| | < 400 µm | 81,02 % |
| | < 600 µm | 100,0 % |
| | | |
| Schüttgewicht: | 489 g/l | |

### Beispiel 1.2:

Ein farbloses oder vorgefärbtes TPU-A-Pulver (kalt nach dem Scheibenmühlverfahren vermahlen) auf Basis HDI/Hexandiol-Butandiol-Adipatester MW=2000/Hexandiol der Härte 89A und einer Kennzahl von 980 wurde in den Sprühwirbelreaktor wie in Figur 1 abgebildet eingetragen. Durch Einblasen von erwärmtem Gas durch den Boden des Reaktors wurde das Pulver ständig in Bewegung gehalten, d.h. verwirbelt. Die Gastemperatur wurde durch die erforderliche Verdampfungswärme der Trägerflüssigkeit und durch die maximal verträgliche Prozesstemperatur der Additive festgelegt.

| | | |
|---|---|---|
| Kornverteilung des Pulvers: | < 125 µm | 24,6 % |
| | < 200 µm | 46,9 % |
| | < 315 µm | 73,7 % |
| | < 400 µm | 90,4 % |
| | < 600 µm | 100,0 % |
| | | |
| Schüttgewicht: | 504 g/l | |
| | | |
| Einwaage des TPU-Pulvers: | 9,682 kg | |

Die Pigmentdispersion wurde wie folgt hergestellt:

In 500 g Aceton wurden 200 g Parocryl^{®} (Bindemittel) gelöst. Die unten aufgeführten Pigmente wurden unter Einsatz hoher Scherkräfte in dieser Lösung dispergiert:

| | |
|---|---|
| Blanc Fixe N^{®} (BaSO4) | 65,8 g |
| TiO R-FC 5^{®} (TiO2) | 12,8 g |
| Elftex TP^{®} (Schwarzpigment) | 40,0 g |

Diese "Stammpaste" wurde mit weiteren 2500 g Aceton auf Sprühviskosität verdünnt.

Es war ebenfalls möglich, anstelle der "Stammpaste" eine in einem Kneter hergestellte "Festharzpräparation" einzusetzen. Dazu schmolz man die obige Menge Parocryl® bei einer Betriebstemperatur von 150°C in einem Kneter und setzte die obigen Pigmente portionsweise zu. Die Festharzpräparation hatte den Vorteil der besseren Handhabung und der unbegrenzten Lagerfähigkeit.

Die Gesamtmenge dieser Pigmentdispersion wurde über einen Zeitraum von ca. 60 min in den Sprühwirbelreaktor eingesprüht. Die Temperatur der Dispersion lag bei Raumtemperatur, die Produkt-Temperatur im Sprühwirbelreaktor betrug 45°C. Die Ausbeute betrug 10,0 kg.

War der Eintrag der Pigmentdispersion beendet, so wurde nach weiteren ca. 5 min eine Probe entnommen, die sofort ohne jegliche weitere Vorbehandlung auf einem Produktions-, Technikums- oder Labor-Powderslush-Werkzeug zu einer genarbten Folie für Instrumententafeloberflächen oder allgemein für Interieuroberflächen gesintert werden konnte. Farbe (L-, a-, b-Werte) und Glanzgrad der Oberfläche konnten sofort gemessen und mit den Urmustern abgeglichen werden. Nach Freigabe konnte das Pulver aus dem Sprühwirbelreaktor abgelassen werden. Wurde Farbe oder/und Glanz nicht getroffen, so konnte das noch im Reaktor befindliche Pulverprodukt durch geeignete Wahl einer 2. Korrekturpigmentdispersion in gleicher Art und Weise wie oben beschrieben nachbehandelt werden.

Eine solche Farbkorrektur ist bei dem herkömmlichen Einfärbeverfahren über ein Farbmasterbatch und Extrusion unmöglich bzw. nur durch sehr hohen Aufwand möglich. Der Grund hierfür liegt darin, dass zunächst ein weiteres Korrektur-Farbmasterbatch über einen Kneter oder Extruder hergestellt werden muss und dass die Fehlcharge erneut mit dem Korrektur-Farbmasterbatch abgemischt und langwierig getrocknet werden muss, bevor diese Mischung dann erneut über den Extruder gefahren wurde. Ein weiterer Nachteil liegt darin, dass das Material ein zweites Mal einer thermoplastische Verarbeitung unterliegt und mögliche Schädigungen hierdurch nicht auszuschließen sind. Beim Einfärbeverfahren über ein Masterbatch muss das eingefärbte Granulat im Anschluss erst noch kalt vermahlen werden. Erst dann kann durch Powderslushen die endgültige Farbfreigabe erfolgen.

Aus den Pulvern der Beispiele 1.1 (Referenz) und Beispiel 1.2. wurden nach dem Powderslushverfahren bei einer Temperatur von 220°C Instrumententafelhäute hergestellt. Die Ergebnisse der mechanischen Ausprüfung und der Alterung bei 130°C sind der Tabelle 1 zu entnehmen.

**Tabelle 1.1: Slushhaut (0,8 mm) aus Beispiel 1.1 (Referenz)**

| Einfärben durch Compoundierung auf dem Extruder | | | | |
|---|---|---|---|---|
| Lagerung bei | ZF | Diff. ZF bzgl. 0h | RD | Diff. RD bzgl. 0h |
| 130°C | [N/mm²] | [%] | [%] | [%] |
| [h] | | | | |
| 0 | 9 | - | 980 | - |
| 336 | 12 | 33 | 650 | -34 |
| 672 | 10 | 11 | 450 | -54 |
| 1008 | 8 | -11 | 300 | -69 |
| 1344 | 7 | -22 | 260 | -73 |
| 1680 | 5 | -44 | 160 | -84 |
| 2016 | 6 | -33 | 140 | -86 |
| 2352 | 5 | -44 | 100 | -90 |
| 2688 | 4 | -56 | 80 | -92 |
| 3024 | 4 | -56 | 90 | -91 |

**Tabelle 1.2: Slushhaut (0,8 mm) aus Beispiel 1.2**

| Einfärben im Sprühwirbelverfahren | | | | |
|---|---|---|---|---|
| Lagerung bei | ZF | Diff. ZF bzgl. 0h | RD | Diff. RD bzgl. 0h |
| 130°C | [N/mm²] | [%] | [%] | [%] |
| [h] | | | | |
| 0 | 8 | - | 280 | - |
| 336 | 9 | +13 | 330 | +18 |
| 672 | 9 | +13 | 300 | + 7 |
| 1008 | 9 | +13 | 290 | + 4 |
| 1344 | 8 | 0 | 240 | -14 |
| 1680 | 7 | -13 | 190 | -32 |
| 2016 | 6 | -25 | 150 | -46 |
| 2352 | 5 | -38 | 130 | -54 |
| 2688 | 5 | -38 | 100 | -64 |
| 3024 | 5 | -38 | 110 | -61 |

| | | | | |
|---|---|---|---|---|
| ZF = Zugfestigkeit nach DIN 53504-S2 RD = Reißdehnung nach DIN 53504-S2 | | | | |

Überraschend wurde gefunden, dass die Reißdehnung im Falle des Beispiel 1.2., also bei einer Einfärbung über das Sprühwirbelverfahren deutlich niedriger lag im Vergleich zu dem gleichen Material, welches nach dem Standardverfahren, also über Extrusion, eingefärbt wurde.

Der Grund für die geringeren Reißdehnungen im Falle der Einfärbung über das Sprühwirbelverfahren liegt darin, dass beim Sintern dieses Pulvers sich die Pulverpartikel nicht durchdringen, sondern es nur zu einer oberflächlichen Verklebung der einzelnen Pulverpartikel kommt. Hierdurch kommt es quasi in den Grenzregionen zwischen den Pulverpartikeln zu Sollbruchstellen, die zu einer deutlich niedrigeren Bruchdehnung führen.

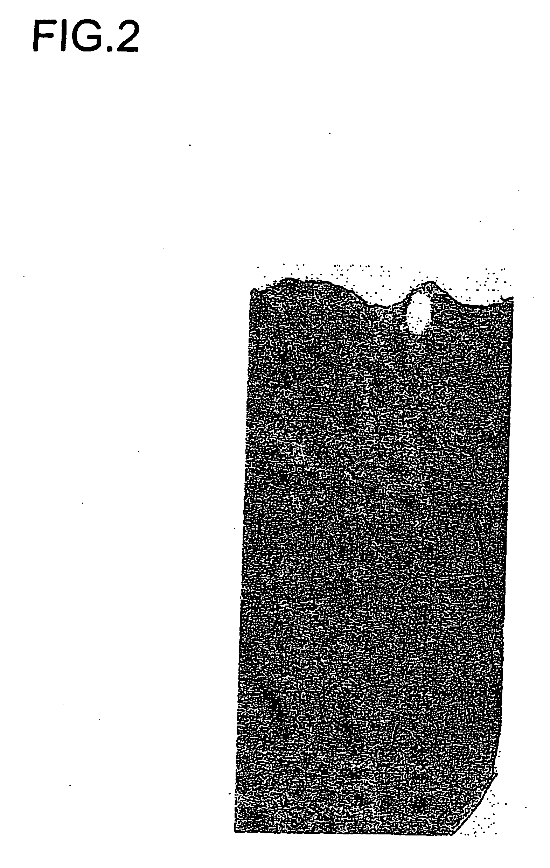

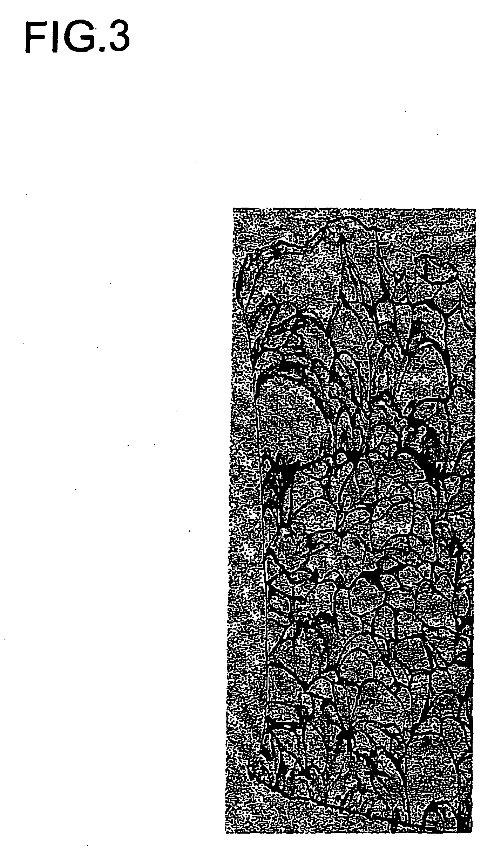

Dieser Sachverhalt wird durch die Lichtmikroskopieaufnahmen in den Figuren 2 und 3 verdeutlicht.
- Figur 2: zeigt eine Lichtmikroskopie einer Slushhaut im Querschnitt, hergestellt nach Beispiel 1.1 (Vergleich).
- Figur 3: zeigt eine Lichtmikroskopie einer Slushaut im Querschnitt, hergestellt nach Beispiel 1.2

Deutlich zu erkennen ist, dass im Falle von Beispiel 1.1 (Figur 2) die Slushhaut vollständig durchgefärbt ist, während im Falle von Beispiel 1.2 (Figur 3) die einzelnen Pulverpartikel deutlich sichtbar sind und nur an den Grenzflächen eingefärbt sind. Dennoch lassen sich bei Betrachtung der genarbten Oberflächen keine visuellen Unterschiede zwischen den beiden Slushhäuten ausmachen.

Dies ist insofern von Vorteil, da eine niedrige Reißdehnung zu einem sicheren und einfacheren Aufreißen des unsichtbaren Airbags führt. Auch zeigt sich hierdurch, dass der relative Abfall bei einer Alterung bei 130 °C im Ofen deutlich niedriger ausfällt, wie dies Tabelle 1 zu entnehmen ist. Oft wird von der Automobilindustrie der relative, prozentuale Abfall nach einer bestimmten Zeit höher bewertet, als das absolute mechanische Niveau nach einer bestimmten Lagerzeit.

### Beispiel 2

1920 g eines TPU-Granulates auf Basis von Elastollan^{®} 1185A wurden in den Sprühwirbelreaktor gemäß Figur 1 eingetragen. Durch Einblasen von erwärmtem Gas durch den Boden des Reaktors wurde das Granulat ständig in Bewegung gehalten, d.h. verwirbelt. Die Gastemperatur wurde durch die erforderliche Verdampfungswärme der Trägerflüssigkeit und durch die maximal verträgliche Prozesstemperatur der Additive festgelegt.

Die Pigmentdispersion wurde wie folgt hergestellt:

In 250 g Aceton wurden 100 g Parocryl^{®} (Bindemittel) gelöst. Die unten aufgeführten Pigmente wurden unter Einsatz hoher Scherkräfte in dieser Lösung dispergiert.

| | |
|---|---|
| Black Pearls^{®} 880 | 6,0 g |
| Ketjenblack^{®} EC 600 JD | 1,2 g |

Diese "Stammpaste" wurde mit weiteren 1000 g Aceton zum Versprühen verdünnt. Die Gesamtmenge dieser Pigmentdispersion wurde in 30 Minuten in den Wirbelreaktor eingesprüht. Die Temperatur der Dispersion und des Zerstäubungsgases liegt bei Raumtemperatur, die Produkttemperatur im Wirbelreaktor beträgt 45°C. Das Granulat wurde beim Beschichten mit einem gleichmäßigen Pigmentüberzug versehen.

Das Granulat lässt sich hervorragend und stippenfrei im Spritzguss oder der Extrusion verarbeiten.

### Beispiel 3:

2000 g eines TPU-A-Pulvers auf Basis HDI/Hexandiol-Butandiol-Adipatester MW=2000/Hexandiol der Härte 89A und einer Kennzahl von 980 werden in den Sprühwirbelreaktor gemäß Figur 1 eingetragen. Durch Einblasen von erhitztem Gas durch den Wirbelboden wurde das Pulver ständig in Bewegung gehalten, d.h. verwirbelt.

Kornverteilung und Schüttgewicht des Pulvers war wie in Beispiel 1.

In diesem Beispiel wurde nun der farbgebenden Dispersion aus Beispiel 1, welche auf die Einsatzmenge von Beispiel 3 umgerechnet wurde, zusätzlich ein Vernetzer zugegeben.

**Tabelle 2:**

| Bsp. | Vorlage Dispersion aus Bsp. 1 [g] | Art des Vernetzers | Zugabe Vernetzer [g] | Test 1 an der geslushten Narboberfläche bzgl. Kratzbeständigkeit [Note] | Test 2 an der geslushten Narboberfläche bzgl. Rubbelbeständigkeit [Note] |
|---|---|---|---|---|---|
| 2.0. | 660 | - | - | 3 | 3 |
| 2.1. | 660 | Trimethylolpropan | 2 | 2 | 2 |
| 2.2. | 660 | Trimethylolpropan | 4 | 1 | 1 |
| 2.3 | 660 | Basonat HB100 | 2 | 1 | 1 |
| 2.4. | 660 | Basonat HI100 | 2 | 1 | 1 |
| 2.5. | 660 | Hydroxyethylmethacrylat | 2 | 1 | 1 |

| | | | | | |
|---|---|---|---|---|---|
| Basonat HB100: Biuret-HDI: Funktionalität: ca. 3,7 Basonat HI100: Isocyanurat-HDI: Funktionalität: ca. 3,7 | | | | | |

Im Falle der Beispiele 2.3. und 2.4., bei denen Basonat HB100 und Basonat HI100 verwendet wurde, war darauf zu achten, dass streng wasserfrei gearbeitet wurde, da es sonst zu einer Polyadditionsreaktion kam.

Das Einbringen der Lösungen erfolgte in gleicher Weise wie in Beispiel 1. Im Anschluss wurde das Pulver auf einem Laborwerkzeug (Galvanoplatte ca. DIN A4 groß mit Narboberfläche) geslusht.

Die Beurteilung der Oberfläche erfolgte durch zwei Tests:

### Test 1: Testbeschreibung zur Beurteilung der Kratzbeständigkeit:

| | |
|---|---|
| Testapparatur: | Zwick Pendelschlagwerk |
| | Typ 5102.100/00 |
| | Schlagfinne 4 Joule |

Ein Normkleinstab (Querschnnittsfläche 6 x 4 mm) aus Elastollan 1185A10 wurde in der Art und Weise an die Schlagfinne befestigt, dass der Normkleinstab mit seiner Querschnittsfläche beim Auslösen der Schlagfinne die mit einem Doppelklebeband ganzflächig fixierte genarbte TPU-Slushhaut gerade noch überstreift. Durch ein einmaliges streifen des Normkleinstabes über die Oberfläche, wurden mehr oder weniger starke Markierungen auf der Oberfläche hinterlassen, die in Anlehnung an VW-Norm PV3906 beurteilt werden. Die Geschwindigkeit und der Impuls mit der der Normkleinstab die Oberfläche streift, wurde durch die 4 Joule-Schlagfinne und die vorgegebene Auslenkhöhe genau vorgegeben.

### Test 2: Testbeschreibung zur Beurteilung der Rubbelbeständigkeit:

| | |
|---|---|
| Rubbelaufdrückkraft: | 30 N |
| Rubbelweg (1 Hub vor und zurück): | 260 mm |
| Rubbelgeschwindigkeit | |
| (1 Hub vor und zurück): | 15 sec |
| Anzahl der Hübe (vor und zurück): | 10 |
| Normgewebe: | Scheuergewebe aus Baumwolle |
| | nach DIN EN ISO 12947-1 |
| | 1996-02 |
| Auflagefläche: | 227 mm² |
| Material Auflagefläche: | Elastomer 50 Shore A |
| Beurteilung der Oberfläche: | in Anlehnung an |
| | VW-Norm PV3906 |

Das Baumwoll-Scheuergewebe wurde unter die Auflagefläche gespannt und die Prüfung mit 10 Hüben unter oben beschriebenen Bedingungen durchgeführt. Die Beurteilung der Oberfläche erfolgte in Anlehnung an VW-Norm PV3906.

### Beurteilungskriterien nach VW-Norm PV3906:

| | |
|---|---|
| Note 1: | keine sichtbaren Veränderungen; z.B. keine Reibspuren |
| | |
| Note 2: | geringe Veränderungen; z.B. schwach erkennbare Reibspuren |
| | |
| Note 3: | deutliche Veränderungen; z.B. Farbveränderung; Obeflächenverletzung |
| | |
| Note 4: | Starke Veränderung; z.B. Sichtbarwerden des Grundmaterials |

Die Bewertung der Beispiele ist Tabelle 2 zu entnehmen. Es zeigte sich, dass durch das schonende Einbringen der Vernetzungsmittel durch das Sprühwirbelverfahren und die anschließende thermisch induzierte Vernetzung während dem Slushprozess eine deutliche Verbesserung der Oberflächeneigenschaften gegen mechanische Einwirkungen erzielt werden konnte.

Würde man diese Vernetzungsmittel direkt schon bei der Herstellung des TPU oder über ein Masterbatch zugeben, so würde schon bei dieser Einarbeitung durch den Temperatureintrag die Vernetzung induziert werden, so dass die Eigenschaft der thermoplastischen Verarbeitbarkeit verloren gehen würde und das Material für das Powder-Slush-Verfahren unbrauchbar ist.

### Beispiel 4:

1920 g eines TPU-Granulates auf Basis von Elastollan^{®} 1185A wurden in den Sprühwirbelreaktor gemäß Figur 1 eingetragen. Durch Einblasen von erwärmtem Gas durch den Boden des Reaktors wurde das Granulat ständig in Bewegung gehalten, d.h. verwirbelt. Die Gastemperatur wurde durch die erforderliche Verdampfungswärme der Trägerflüssigkeit und durch die maximal verträgliche Prozesstemperatur der Additive festgelegt.

Die Pigmentdispersion wurde wie folgt hergestellt:

In 200 g Aceton wurden 40 g Parocryl^{®} (Bindemittel) gelöst und anschließend unter schonendem Rühren 61,5 g Aluminiumflakes (Stapa Hydrolux^{®} 2153, Lieferform als 65 %ige Paste) eingearbeitet.

Diese "Stammpaste" wurde mit weiteren 200 g Aceton zum Versprühen verdünnt. Die Gesamtmenge dieser Pigmentdispersion wurde in 60 Minuten in den Wirbelreaktor eingesprüht. Die Temperatur der Dispersion und des Zerstäubungsgases lag bei Raumtemperatur, die Produkttemperatur im Wirbelreaktor betrug 43°C. Das Granulat wurde beim Beschichten mit einem gleichmäßigen Pigmentüberzug versehen.

Die Ausbeute betrug 1980 g.

Ein mit diesem Ausgangsmaterial nach dem Slushverfahren hergestellter Probekörper zeigte eine sehr helle, gleichmäßige Silberfärbung. Dieses Verfahren eröffnet bis jetzt nicht realisierbare coloristische Möglichkeiten.

## Patentansprüche

1. Verfahren zur Aufbringung von Funktionsmaterialien auf thermoplastisches Polyurethan, umfassend folgende Schritte
a) Eintragen von partikelförmigem thermoplastischem Polyurethan in eine Mischvorrichtung,
b) in Bewegung halten des partikelförmigen thermoplastischen Polyurethans in der Mischvorrichtung und währenddessen
c) Einbringen von Funktionsmaterialien oder eines Funktionsmaterialien enthaltenden Gemisches in zerstäubter Form in die Mischvorrichtung.

2. Verfahren nach Anspruch 1, **dadurch gekennzeichnet, dass** es sich bei der Mischvorrichtung um einen Sprühwirbelreaktor handelt.

3. Verfahren nach Anspruch 1 oder 2, **dadurch gekennzeichnet, dass** das partikelförmige thermoplastische Polyurethan durch Verwirbelung mittels eines Gasstroms in Bewegung gehalten wird.

4. Verfahren nach einem der Ansprüche 1 bis 3, **dadurch gekennzeichnet, dass** die Funktionsmaterialien in einem Lösungsmittel oder einem Lösungsmittelgemisch gelöst oder dispergiert werden und in die Mischvorrichtung eingesprüht werden.

5. Verfahren nach einem der Ansprüche 1 bis 4, **dadurch gekennzeichnet, dass** die Funktionsmaterialien Pigmente, Füllstoffe, Farbstoffe, Nukleierungshilfsmittel, Vernetzungsmittel, Gleitmittel, Verarbeitungshilfen, Stabilisatoren, Flammschutzmittel, Treibmittel oder Gemische davon umfassen.

6. Verwendung eines Teilchengemischs, umfassend Teilchen, aufgebaut aus
i) einem Kern mit einem mittleren Durchmesser von 10 µm bis 10 mm, enthaltend thermoplastisches Polyurethan und
ii) einer Hülle, bevorzugt mit einer mittleren Dicke von 0,1 µm bis 500 µm, enthaltend Funktionsmaterialien.
zur Beschichtung von Oberflächen durch Sintern.

7. Verwendung nach Anspruch 6, **dadurch gekennzeichnet, dass** der Kern einen mittleren Durchmesser von 10 µm bis 700 µm aufweist.

8. Verfahren zur Herstellung eines Formkörpers, insbesondere einer genarbten Folie, umfassend die Schritte
a) Einbringen eines Teilchengemisches, umfassend Teilchen, aufgebaut aus
i) einem Kern mit einem mittleren Durchmesser von 10 µm bis 10 mm, enthaltend thermoplastisches Polyurethan und
ii) einer Hülle, bevorzugt mit einer mittleren Dicke von 0,1 µm bis 500 µm, enthaltend Funktionsmaterialien
in eine Form
b) Sintern des Teilchengemisches in der Form.

9. Verfahren nach Anspruch 8, **dadurch gekennzeichnet, dass** der Kern einen mittleren Durchmesser von 10 µm bis 700 µm aufweist.

10. Formkörper, erhältlich durch ein Verfahren gemäß Anspruch 8 oder 9.

11. Verwendung des Formkörpers gemäß Anspruch 10 zur Herstellung von Instrumententafeloberflächen.

## Claims

1. A process for applying functional materials to thermoplastic polyurethane, comprising the following steps
a) introducing particulate thermoplastic polyurethane into a mixing apparatus,
b) keeping the particulate thermoplastic polyurethane in motion in the mixing apparatus, and during this time
c) introducing functional materials, or a mixture comprising functional materials, in atomized form into the mixing apparatus.

2. The process according to claim 1, wherein the mixing apparatus is a fluidized-bed spray reactor.

3. The process according to claim 1 or 2, wherein the particulate thermoplastic polyurethane is kept in motion by fluidization by means of a stream of gas.

4. The process according to any of claims 1 to 3, wherein the functional materials are dissolved or dispersed in a solvent or solvent mixture, and sprayed into the mixing apparatus.

5. The process according to any of claims 1 to 4, wherein the functional materials comprise pigments, fillers, dyes, nucleating agents, crosslinkers, lubricants, processing aids, stabilizers, flame retardants, blowing agents, or a mixture of these.

6. The use of a particle mixture comprising particles composed of
i) a core with a median diameter of from 10 µm to 10 mm, comprising thermoplastic polyurethane, and
ii) a shell, preferably with a median thickness of from 0.1 µm to 500 µm, comprising functional materials, for coating surfaces by sintering.

7. The use according to claim 6, wherein the core has a median diameter of from 10 to 700 µm.

8. A process for producing a shaped article, in particular a grained film, comprising the steps of
a) introducing a particle mixture comprising particles composes of
i) a core with a median diameter of from 10 µm to 10 mm, comprising thermoplastic polyurethane, and
ii) a shell, preferably with a median thickness of from 0.1 µm to 500 µm, comprising functional materials, for coating surfaces by sintering.
b) sintering the particle mixture in the mold.

9. The process according to claim 8, wherein the core has a median diameter of from 10 µm to 700 µm.

10. A shaped article obtainable by a process according to claim 8 or 9.

11. The use of the shaped article according to claim 10 for producing instrument panel surfaces.

## Revendications

1. Procédé d'application de matériaux fonctionnels sur du polyuréthanne thermoplastique, comprenant les étapes suivantes :
a) une introduction de polyuréthanne thermoplastique particulaire dans un dispositif de mélange,
b) un maintien en mouvement du polyuréthanne thermoplastique particulaire dans le dispositif de mélange et, pendant cela,
c) un apport de matériaux fonctionnels ou d'un mélange contenant des matériaux fonctionnels, sous une forme pulvérisée, dans le dispositif de mélange.

2. Procédé suivant la revendication 1, **caractérisé en ce que**, pour ce qui concerne le dispositif de mélange, il s'agit d'un réacteur tourbillonnaire à pulvérisation.

3. Procédé suivant la revendication 1 ou 2, **caractérisé en ce que** le polyuréthanne thermoplastique particulaire est maintenu en mouvement par tourbillonnement au moyen d'un courant gazeux.

4. Procédé suivant l'une des revendications 1 à 3, **caractérisé en ce que** les matériaux fonctionnels sont dissous ou dispersés dans un solvant ou un mélange de solvants et sont injectés dans le dispositif de mélange.

5. Procédé suivant l'une des revendications 1 à 4, **caractérisé en ce que** les matériaux fonctionnels comportent des pigments, des charges, des colorants, des adjuvants de nucléation, des agents réticulants, des lubrifiants, des auxiliaires de traitement, des stabilisants, des agents ignifuges, des agents gonflants ou leurs mélanges.

6. Utilisation d'un mélange de particules, comportant des particules constituées
i) d'un noyau présentant un diamètre moyen de 10 µm à 10 mm, contenant du polyuréthanne thermoplastique, et
ii) d'une enveloppe, de préférence d'une épaisseur moyenne de 0,1 µm à 500 µm, contenant des matériaux fonctionnels,
pour le recouvrement de surfaces par frittage.

7. Utilisation suivant la revendication 6, **caractérisé en ce que** le noyau présente un diamètre moyen de 10 µm à 700 µm.

8. Procédé de préparation d'un corps façonné, en particulier d'une feuille grainée, comprenant les étapes
a) d'introduction d'un mélange de particules, comportant des particules constituées
i) d'un noyau présentant un diamètre moyen de 10 µm à 10 mm, contenant du polyuréthanne thermoplastique, et
ii) d'une enveloppe, de préférence d'une épaisseur moyenne de 0,1 µm à 500 µm, contenant des matériaux fonctionnels, dans un moule,
b) de frittage du mélange de particules dans le moule.

9. Procédé suivant la revendication 8, **caractérisé en ce que** le noyau présente un diamètre moyen de 10 µm à 700 µm.

10. Corps façonné, que l'on peut obtenir par un procédé suivant la revendication 8 ou 9.

11. Utilisation du corps façonné suivant la revendication 10, pour la fabrication de surfaces de plaques d'instruments.
